# EUROPÄISCHE PATENTSCHRIFT

(11) **EP 2 419 723 B1**
(45) Veröffentlichungstag und Bekanntmachung des Hinweises auf die Patenterteilung: **18.01.2017**
(21) Anmeldenummer: 10717501.0
(22) Anmeldetag: 26.03.2010
(51) Int. Cl.: G01N 29/14, G01N 29/24, G01N 29/265, G01N 29/46, G01N 29/44, G01M 17/013

(54) **VERFAHREN SOWIE VORRICHTUNG ZUR DETEKTION STRUKTURELLER VERÄNDERUNGEN IN ODER AN EINEM FESTKÖRPER MITTELS KÖRPERSCHALLANALYSE**
METHOD AND APPARATUS FOR DETECTION OF STRUCTURAL CHANGES IN A SOLID BODY BY ANALYSIS OF ACOUSTIC EMSSIONS
PROCÉDÉ ET DISPOSITIF POUR DÉTECTER DES CHANGEMENTS STRUCTURELS D'UN CORPS SOLIDE PAR ANALYSE DES ÉMISSIONS ACOUSTIQUES

(30) Priorität: 14.04.2009 DE 102009017020
(43) Veröffentlichungstag der Anmeldung: 22.02.2012
(73) Patentinhaber: Gehrlein, Jan, 76756 Bellheim (DE)
(72) Erfinder: SCHRÖDER, Hehrwart, 88662 Überlingen-Hödingen (DE)
(74) Vertreter: Otten, Roth, Dobler & Partner mbB Patentanwälte
(86) Internationale Anmeldenummer: PCT/DE2010/000339
(87) Internationale Veröffentlichungsnummer: WO 2010/118722

(56) Entgegenhaltungen:
- EP-A1- 1 548 419
- COLLETTE C ET AL: "Laser measurement of torsional vibrations/longitudinal creepage of a railway wheel set on a scaled test bench" OPTICS AND LASERS IN ENGINEERING, ELSEVIER LNKD- DOI:10.1016/J.OPTLASENG.2008.03.011, Bd. 47, Nr. 3-4, 1. März 2009 (2009-03-01) , Seiten 385-389, XP025914928 ISSN: 0143-8166 [gefunden am 2008-05-05]
- THAKKAR N A ET AL: "Rail-wheel interaction monitoring using Acoustic Emission: A laboratory study of normal rolling signals with natural rail defects" MECHANICAL SYSTEMS AND SIGNAL PROCESSING, LONDON, GB LNKD- DOI:10.1016/J.YMSSP.2009.06.007, Bd. 24, Nr. 1, 1. Januar 2010 (2010-01-01) , Seiten 256-266, XP026643443 ISSN: 0888-3270 [gefunden am 2009-06-27]

## Beschreibung

Die Erfindung betrifft ein Verfahren zur Detektion struktureller Veränderungen in oder an einem Festkörper nach dem Anspruch 1 sowie eine nach diesem Verfahren arbeitende Vorrichtung als auch eine Anordnung von entsprechenden nach dem Verfahren arbeitenden Vorrichtungen an einer Maschine, insbesondere einem Fahrzeug.

Maschinenbestandteile bzw. Bauelemente, welche sich über einen längeren Zeitraum kontinuierlich bewegen müssen, unterliegen einem belastungsbedingten Verschleiß. Dieser Verschleiß ist neben gegebenen Materialeigenschaften abhängig von der zeitlichen Belastung und insbesondere von der Nutzungsintensität während der Einsatzzeitdauer. Trotz übereinstimmender Herstellung sind oftmals bei baugleichen Bestandteilen stark unterschiedliche Verschleißzeiträume zu beobachten, wodurch Wartungsintervalle stets anhand des kürzesten zu erwartenden Zeitraums der fehlerfreien Funktion bemessen werden. Insbesondere im Bereich von Fahrzeugen, vorzugsweise bei Schienenfahrzeugen entstehen auf diese Weise erhebliche Kosten sowie Nutzungsausfälle, welche oftmals rein präventiv begründet sind und keine tatsächlichen verschleißbedingten Schäden zur Ursache haben.

Im technischen Umfeld kontinuierlich bewegter Maschinenteile, beispielsweise bei Achsen von Großmaschinen, Drehvorrichtungen, Generatoren, Fertigungsstraßen oder ähnlichem, aber auch bei Fahrzeugen, beispielsweise Schienenfahrzeugen oder Straßenfahrzeugen, können die entsprechenden Bestandteile nur schwer zugänglich sein, wodurch eine verschleißdiagnostische Untersuchung oftmals zusätzlich erschwert wird.

Aus dem Stand der Technik ist beispielsweise bei Radreifen von Schienenfahrzeugen bekannt, dass erfahrene Techniker mittels eines manuell ausgeführten Hammerschlags hören können, ob der metallische Klang der erzeugten Schwingung einem fehlerfreien Radreifen entspricht oder ob eventuell strukturelle Defekte am Radreifen vorliegen. Eine etablierte und bekannte Methode der Detektion struktureller Defekte, beispielsweise an Eisenbahnradreifen, stellt die Demotage und Untersuchung in entsprechenden Röntgenanlagen dar, welche jedoch äußerst zeit-und kostenaufwendig ist und einen langfristigen Stillstand der jeweiligen Maschine bedingt. Aus der EP 1 548 419 A1 ist weiterhin ein Verfahren bekannt, bei welchem eine Fehlererkennung ohne Demontage des zu untersuchenden Objekts angestrebt wird, indem vom zu untersuchenden Objekt ein elektronisches Signal generiert und analysiert wird. Aus "Optics and Lasers in Engineering, 47 (2009), 385-389" ist eine Laser Doppler Vergleichsmessung mit einem theoretisch berechneten Modell des Festkörpers bekannt, um einen Defekt zu erkennen. Dabei ist jedoch eine Demontage eines Radreifens notwendig.

Aufgabe der Erfindung ist es somit ein Verfahren zur Verfügung zu stellen, welches eine einfache, vorzugsweise kontinuierliche Erfassung des Zustandes eines Festkörpers erlaubt, wobei strukturelle Veränderung in oder an einem Festkörper über entsprechende Analyseschritte kurzfristig feststellbar sind, so dass entsprechende Reaktionen eingeleitet werden können.

Erfindungsgemäß wird diese Aufgabe durch die Anwendung der Verfahrensschritte nach Anspruch 1 bzw. durch die Nutzung einer Vorrichtung nach Anspruch 11 gelöst. Vorteilhafte Weiterbildungen sowie zweckmäßige Ausgestaltungen sind in den abhängigen Ansprüchen gegeben.

Das erfindungsgemäße Verfahren zur Detektion struktureller Veränderungen in oder an einem Festkörper nutzt die Körperschallanalyse, welche mindestens eine Anwendung folgender Verfahrensschritte umfasst:
- Erfassung eines ersten charakteristischen Grenzflächenschall-Spektrum des Festkörpers zu einem ersten Zeitpunkt.
- Verarbeitung und Speicherung des ersten Spektrums in einem Datenspeicher.
- Erfassung eines zweiten charakteristischen Grenzflächenschall-Spektrums des Festkörpers zu einem zweiten Zeitpunkt.
- Verarbeitung und Speicherung des zweiten Spektrums in einen Datenspeicher.
- Auswertung der gespeicherten Daten durch Vergleich zwischen dem ersten Grenzflächenschall-Spektrum und dem zweiten Grenzflächenschall-Spektrum zur Erkennung von Veränderungen.

Die Erfindung ist dadurch gekennzeichnet, dass
- das Grenzflächenschall-Spektrum ein Schwingungsspektrum von Oberflächenschwingungen des Festkörpers ist
- und die Erfassung der charakteristischen Grenzflächenschall-Spektren mittels einer Laser Interferenz Messung über eine Amplitudenmodulation erfolgt
- und die Erfassung der charakteristischen Grenzflächenschall-Spektren und die Auswertung kontinuierlich im Wechsel erfolgt.

Schall, welcher sich in einem Werkstück ausbreitet, heißt Körperschall. Dieser umfasst unterschiedlichste Phänomene wie beispielsweise Erschütterungen, welche die Übertragung von Schwingungen in Gebäuden, Fahrzeugen und Maschinen darstellen, als auch durch Reibung erzeugte Vibrationen, welche beispielsweise durch den Lauf bewegter Teile in einem Lager generiert werden. Dieser Schall erstreckt sich in seinem Spektralbereich vom Infraschall über den Ultraschallbereich bis zum Hyperschall zu den Gitterschwingungen und der Quantenakustik.

Ein elastischer Festkörper kann neben Normalspannungen auch Schubspannungen aufnehmen, wodurch sich im allseitig unbegrenzten Werkstück zwei verschiedene Arten von Körperschallwellen ausbreiten können, einerseits Longitudinalwellen und andererseits Transversalwellen. Derartige Schallwellen erzeugen an den Grenzflächen von Festkörpern entsprechend ihrer Amplitude und Frequenz entstehende oszillierende Bewegungen, welche beispielsweise als hörbarer Schall an die umgebende Luft übertragen werden können. Die physikalischen Eigenschaften der Schallausbreitung, beispielsweise die Schallgeschwindigkeit, wird dabei durch Materialkonstanten wie die Dichte und den Schubmodul beschrieben, und gehorcht bekannten physikalischen Gesetzen.

Durch die gegebenen geometrischen Begrenzungen existierender Festkörper erfahren existierende Schallwellen in dem Festkörper entsprechende Wechselwirkungen mit den Grenzflächen bildenden Oberflächen, wodurch nach den bekannten physikalischen Gesetzmäßigkeiten der Superposition Schallwellen unterschiedlicher Wellenlängen in unterschiedlicher Intensität vorliegen, bzw. unterschiedliche Amplituden-Zeit-Verläufe zeigen. Das somit für einen existierenden Festkörper charakteristische Schallspektrum, welches nicht zuletzt auch Abhängigkeiten von der Erzeugungsart des betrachteten Schalls beinhaltet, stellt somit eine Art Fingerabdruck des Werkstücks dar, welcher die geometrischen und materialspezifischen Gegebenheiten des Festkörpers wiederspiegelt.

Entstehen nunmehr unregelmäßige Schallanregungen, beispielsweise durch Unebenheiten auf Eisenbahnschienen, oder erfährt der Körper strukturelle Veränderungen, beispielweise durch das Entstehen von Fehlstellen, Rissbildungen oder internen bzw. oberflächennahen Verformungen, so ändert sich das charakteristische Schallspektrum entsprechend der neu aufgetretenen Gegebenheit, da beispielsweise an entstandenen Fehlstellen wir Rissen, propagierende Schallwellen reflektiert werden können, oder andere Wellenlängen aufgrund des Superpositionsprinzips verstärkt ausgebildet vorliegen.

Das erfindungsgemäße Verfahren nutzt die Erfassung eines derartigen Fingerabdrucks an der Grenzfläche in Form eines charakteristischen Grenzflächenschall-Spektrums zur Detektion struktureller Veränderungen. Erfindungsgemäß wird ein charakteristisches Grenzflächenschall-Spektrum zu einem ersten Zeitpunkt an einem Festkörper erfasst und gespeichert. Zu einem späteren Zeitpunkt, welcher entweder direkt auf die erste Erfassung folgen, oder zeitlich über einen längeren Zeitraum versetzt liegen kann, folgt eine weitere Erfassung eines charakteristischen Grenzflächenschall-Spektrums des Festkörpers, wobei in einem anschließenden Verfahrensschritt das zuletzt erfasste Spektrum mit einem vorangegangen erfassten Spektrum verglichen wird, um auf diesem Wege Veränderungen des Fingerabdrucks des untersuchten Festkörpers festzustellen. Hierbei können Referenzbildungen zwischen zwei direkt aufeinander folgend aufgenommenen Spektren erfolgen, es können jedoch auch gespeicherte frühere Spektren in Betracht gezogen werden, um über langfristige Messungen kurzzeitig auftretende Fehler herauszumitteln.

Die Erfassung der charakteristischen Grenzflächenschall-Spektren erfolgt mittels einer Laser-Interferenzmessung, wobei die Amplitudenmodulation des Referenzsignals Aufschluss über die Amplitude der Grenzflächenschwingung des Festkörpers gibt. Hierbei ist eventuell eine Rückkopplung der Signalstärke bei der miteinander interferierender Laserstrahlen über einen Strahlenteiler vorzusehen, da die betragsgemäße Intensität der miteinander in Interferenz gebrachten Laserstrahlen in derselben Größenordnung liegen sollte, um eine deutliche Modulation der erhaltenen Interferenz-Amplitude nutzbar zu machen.

Das auf diese Weise erhaltene charakteristische Grenzflächenschall-Spektrum stellt ein Schwingungsspektrum von Oberflächenschwingungen des betrachteten Festkörpers dar. Vorzugsweise wird das charakteristische Grenzflächenschall-Spektrum als Intensitäts-Zeit-Verlaufsmessung erfasst, so dass ein reproduzierbares Mess-Zeitfenster gewährleistet ist.

In einer vorteilhaften Weiterbildung des erfindungsgemäßen Verfahrens wird die Auswertung in einem weiteren Verfahrensschritt einer Integraltransformation unterzogen, vorzugsweise einer Fouriertransformation oder einer Wavelet-Transformation, welche einer spektralen Darstellung des erfassten charakteristischen Grenzflächenschall-Spektrums dient.

Eine spektrale Darstellung bietet die Möglichkeit, entsprechende Signallinien dahingehend auszuwerten, ob beispielsweise ein dauerhafter Schaden vorliegt, bei welchem sich die Signallinie verbreitert, oder ob eine kurzfristige Störung, beispielsweise durch eine impulsartige Einwirkung auf den Festkörper, Auslöser für eine Veränderung im charakteristischen Schallspektrum war. Über eine langzeitlich angelegte Erfassung derartiger spektraler Darstellungen kann beispielsweise ein Klassifikator für bekannte Schäden aufgestellt werden, welcher sodann nach erfolgter Auswertung Aufschluss über den Grund der strukturellen Veränderung in dem Festkörper zumindest ansatzweise bieten kann.

In einer vorteilhaften Weiterbildung wird die Auswertung durch Wandlung der gewonnenen Messgrößen in einem analog/digital Wandler und Übertragung an einen Rechner vorgenommen. Auf diese Weise können die Erfassungseinrichtung und die verhältnismäßig aufwendige Auswerteeinrichtung räumlich getrennt vorliegen, wobei zusätzlich auch die digitale Datenspeicherung ermöglicht wird.

In einem weiteren vorteilhaften Verfahrensschritt wird die Auswertung durch Differenzbildung zur Erkennung von spektralen Veränderung zwischen mindesten dem zuletzt aufgenommenen, charakteristischen Grenzflächenschall-Spektrum und mindestens einem oder mehreren, vorzugsweise auch gemittelten vorangegangenen aufgenommen und gespeicherten Grenzflächenschall-Spektren vorgenommen. Auf diese Weise können verbesserte Signalgüter erreicht werden.

In einer zweckmäßigen Weiterbildung können zusätzlich weitere charakteristische Daten, vorzugsweise Geschwindigkeits- und Drehzahldaten sowie makroskopische Bewegungen beispielsweise über Doppler-Effekt-Messungen erfasst und ebenfalls an die Auswerteeinheit übergeben werden.

In einer überdies vorteilhaften Ausgestaltung des Verfahrens erfolgt die Aufnahme der charakteristischen Grenzflächenschall-Spektren in einem Punkt auf der Oberfläche des Festkörpers, wobei eine rasterartige Abtastung der Oberfläche ganz oder teilweise mit dem entsprechenden Messpunkt erfolgen kann. Auf diese Weise können zusätzliche Daten gewonnen werden, welche nicht auf dem Abnahmepunkt beschränkt sind, sondern weitere aufschlussreiche Informationen über die Gesamtbeschaffenheit des Festkörpers zur Verfügung stellen.

Die Erfindung betrifft weiterhin eine Vorrichtung zur Detektion struktureller Veränderungen in oder an einem Festkörper, wobei die Vorrichtung einen Prüfkopf zur Erfassung von Oberflächenschwingungen eines Festkörpers und einen Auswerterechner, vorzugsweise mit einer Speichereinheit zur Verarbeitung der von mindestens einem Prüfkopf übermittelten Daten umfasst, wobei die Vorrichtung nach einem erfindungsgemäßen vorher beschriebenen Verfahren, arbeitet.

In einer Ausgestaltung umfasst der Prüfkopf eine monochromatische Lichtquelle, vorzugsweise einem Laser, einen Strahlteiler zur Erzeugung interferierbarer Lichtstrahlen aus der Lichtquelle, einen Intensitätsdetektor, vorzugsweise eine Fotozelle oder eine Fotozellenanordnung sowie eine analog/digital Wandlungseinheit. Das von der monochromatischen Lichtquelle ausgesandte Licht wird über den Strahlenteiler zu einem Bestandteil auf den Festkörper geleitet, von diesem reflektiert, und mit dem weiteren Bestandteil, welcher durch den Strahlenteiler bereit gestellt wurde, auf dem Fotodetektor, bzw. der Fotozelle zur Interferenz gebracht. Hierbei ist es vorteilhaft, darauf zu achten, dass die Intensität der in Interferenz gebrachten Lichtstrahlen in etwa die gleiche Größenordnung aufweist, um der durch die Interferenz entstandenen Amplitudenmodulation des erhaltenen Signals eine gute Detektierbarkeit zu ermöglichen. In einer Weiterbildung der erfindungsgemäßen Vorrichtung ist vorgesehen, dass der Festkörper ein Metallkörper, vorzugsweise ein Rad eines Schienenfahrzeugs, ist. Erfassung charakteristischer Grenzflächenschall-Schwingungen eines metallischen Festkörpers bieten den Vorteil, dass metallische Oberflächen oftmals unproblematisch als Reflektionsoberflächen für Licht geeignet sind und somit für die erfindungsgemäße Erfassung direkt und einfach zugänglich sind.

In einer überdies vorteilhaften Ausgestaltung erfolgt die Erfassung der Oberflächenschwingung auf der Lauffläche eines Rades eines Schienenfahrzeugs, da diese in der Regel durch entstandene Reibung mit den Schienen poliert und frei von Verunreinigung ist.

In einer vorteilhaften Weiterbildung der erfindungsgemäßen Vorrichtung weist der Prüfkopf Mittel zur rasterartigen Bewegung eines Messpunktes, vorzugsweise eines Laserpunktes auf, wodurch die Erfassung der Oberflächenschwingung nicht punktuell begrenzt ist, sondern beispielsweise in Form eines linearen oder flächigen Rasters über den Festkörper bewegt werden kann. Auf diese Weise sind, wie voran bereits beschrieben, erweiterte Daten über die strukturellen Eigenschaften des Festkörpers erhaltbar.

Die Erfindung umfasst weiterhin eine Verwendung von erfindungsgemäßen Vorrichtungen zur Detektion struktureller Veränderungen in oder an einem oder mehreren Festkörpern, vorzugsweise an Laufrädern von Schienenfahrzeugen, wobei mindestens ein Prüfkopf pro Festkörper mindestens ein Auswerterechner und entsprechende Verbindungsleitungen umfasst sind, und die Erfassung an der Lauffläche der Festkörper, vorzugsweise an der Lauffläche der Laufräder von Schienenfahrzeugen erfolgt. Auf diese Weise können in einem zentralen Auswerterechner Signale mehrerer Prüfköpfe zusammengefasst werden, so dass beispielsweise bei einem Schienenfahrzeug eine Überwachung auf strukturelle Veränderung jedes einzelnen Laufrads erfolgen kann. In einer überdies vorteilhaften Ausgestaltung der erfindungsgemäßen Anordnung ist die komplette Anordnung in einem Fahrzeug, vorzugsweise einem Schienenfahrzeug mitbewegt ausgebildet, so dass über den gesamten Arbeitszeitraum eine entsprechende Erfassung möglich ist. Vorteilhafterweise könnte beispielsweise bei einem Zug die Auswerteeinheit im Bereich der Lokomotive vorgesehen sein, und die entsprechenden Radreifen der Lokomotive bzw. der einzelnen bewegten Wagons mit entsprechenden Prüfköpfen versehen werden, welche sodann kaskadiert, vorzugsweise über ein BUS-Sytem, ihre Daten an die Auswerteeinheit dem Zugfahrzeug, übermitteln.

In einer verbesserten und weiteren vorteilhaften Ausgestaltung der erfindungsgemäßen Verwendung ist mindestens eine Kamera und mindestens ein Positionserfassungsmittel, vorzugsweise ein GPS-Sensor am entsprechenden Schienenfahrzeug bzw. Fahrzeug vorgesehen, wobei eine detektierte strukturelle Veränderung, insbesondere eine kurzzeitige detektierte Veränderung, welche beispielsweise durch eine Unebenheit der Schiene oder ein auf der Schiene liegendes Störmittel erzeugt wird, ein Schaltsignal für eine Aktivierung der Kamera und eine Erfassung der Position ist.

Auf diese Weise kann erreicht werden, dass kurzzeitig auftretende Veränderungen im charakteristischen Grenzflächenschall-Spektrum darauf zurückführbar sind, dass keine dauerhafte Veränderung struktureller Art im Festkörper stattgefunden hat, sondern eine externe Einwirkung auf den Festkörper erfolgt ist. Wird sodann beispielsweise eine dem jeweiligen Radreifen nachfolgende Kamera entsprechend der Bewegungsgeschwindigkeit des Schienenfahrzeugs an derselben Stelle ausgelöst, so kann eine optische Erfassung der Störstelle erfolgen, und diese unter Koppelung an entsprechende Positionsdaten direkt an ein Service-Center übermittelt werden, welche sodann die Beseitigung der Störstelle vornehmen.

Das erfindungsgemäße Verfahren sowie eine erfindungsgemäße Vorrichtung wird im folgenden Ausführungsbeispiel näher erläutert. Die Erfindung ist jedoch nicht auf das gezeigte Ausführungsbeispiel beschränkt, sie umfasst vielmehr all diejenigen Realisierungen, welche vom erfindungswesentlichen Gedanken Gebrauch machen.

Im Ausführungsbeispiel zeigen
- Figur 1: eine Zusammenstellung exemplarisch übermittelter charakteristischer Grenzflächenschall-Messungen,
- Figur 2: eine Anordnung einer erfindungsgemäßen Vorrichtung an einem Radreifen eines Schienenfahrzeugs.
- Figur 3: zeigt eine schematische Anordnung der erfindungsgemäßen Vorrichtung.

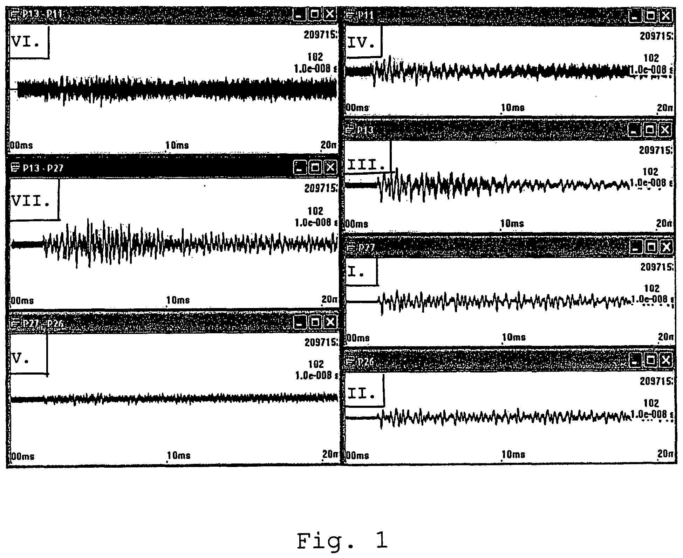

Im Einzelnen zeigt die Figur 1 eine Zusammenstellung von über die Zeit aufgetragenen Amplitudenmodulationen erfindungsgemäßer Erfassungssignale charakteristischer Grenzflächenschall-Spektren. Zur Verdeutlichung des erfindungsgemäßen Verfahrens wurden vorliegend an einem Festkörper Referenzmessungen in ungestörtem Zustand vorgenommen, den Körper sodann eine strukturelle Veränderung zugefügt und weitere Messungen im somit gestörten Zustand erfasst. Die Messungen I sowie II stellen Amplituden-Zeitverläufe einer charakteristischen Grenzflächenschwingung eines ungestörten Festkörpers dar. Der gezeigte Verlauf stellt die aufgrund der Interferenz eines Laserstrahls veränderte Amplitude dar, wobei der Amplitudenverlauf direkt im Zusammenhang mit der Variation des Lichtlaufwegs aufgrund der Bewegung der Festkörpergrenzfläche, resultierend aus deren Schwingung, entsteht. Etwaige, Signal-Rausch-Verhältnis optimierende Verfahrensschritte, welche dem Fachmann aufgrund seiner messtechnischen Vorerfahrung bekannt sind, werden vorliegend außer Betracht gelassen.

III sowie IV zeigen Signalverläufe, welche am strukturell veränderten Festkörper, also am gestörten Festkörper vorgenommen würden. Bereits den gezeigten Signalverläufen ist eine Veränderung des charakteristischen Grenzflächenschall-Spektrums zu entnehmen, wobei die im Ausführungsbeispiel vorgenommene strukturelle Veränderung in einem, den Einsatzalltag des erfindungsgemäßen Verfahrens überschreitendes Ausmaß vorgenommen wurde.

Der Signalverlauf V wurde als Differenzbildung der Signale I und II erzeugt, um die Reproduzierbarkeit des bezeichneten charakteristischen Spektrums eines Körpers ohne auftretende strukturelle Veränderung darzustellen. Der Signalverlauf VI entspricht der ebenfalls vergleichend gegenübergestellten Differenz der Messungen III und IV, um auch diesbezüglich eine Vergleichbarkeit der aufeinander folgenden Messungen zu gewährleisten.

Der in VII dargestellte Amplituden-Zeitverlauf entspricht dem Auswertesignal, erhalten aus der Referenzbildung der Signale V und VI. Es wurde zur Auswertung die Differenz zweier normierter Signale vor und nach der Vornahme einer strukturellen Veränderung angegeben, wobei sich das abzeichnende Muster als charakteristisch für die Beschädigung ergibt. Durch eine spektrale Analyse der entsprechenden Signale könnte weiterhin Aufschluss darüber gewonnen werden, in welchen Dimensionen die strukturelle Veränderung vorliegt, da die Schallwellen entsprechend der Größenordnung von Fehlstellen in ihrer Wechselwirkung abhängig von ihrer Wellenlänge mehr oder weniger stark mit den Fehlstellen in Wechselwirkung treten.

Durch den Einsatz bekannter Methoden der numerischen Mathematik, beispielsweise durch Approximationen der Messdaten zur Überwindung des Zufallrauschens, und durch Zeitreihenanalysen, welche vom Ausgangszustand ausgehend mehrfache Vergleiche mit zu einem späteren Zeitpunkt aufgenommenen charakteristischen Spektren vornehmen, kann somit eine Vielzahl von Signalen erfasst und gespeichert werden, welche den zeitlichen Verlauf struktureller Veränderungen einzelner Festkörper, vorzugsweise einzelner Radreifen von Schienenfahrzeugen, wiederspiegeln. Unter Heranziehung von Integraltransformationen, beispielsweise von Wavelet-Tranformationen oder Fourie-Analysen, können die entsprechenden charakteristischen Wellengruppen noch besser beschrieben werden und die einzelnen Unterschiede, resultierend aufgrund struktureller Veränderungen im Festkörper, erfasst werden. Durch die entsprechenden Zeitreihenanalysen der einzelnen Signale lassen sich somit Klassifikatoren für einzelne Schäden erkennen und klassifizieren, so dass zusätzlich zur grundsätzlichen Erkennung struktureller Veränderungen mit der Zeit Aufschlüsse über die jeweilig auftretenden Veränderungen im Detail gewonnen werden können.

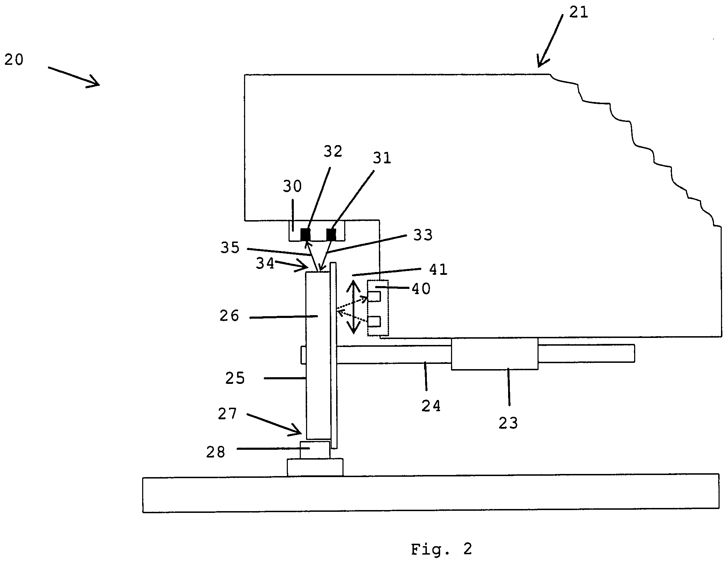

Figur 2 zeigt die schematische Darstellung eines Schienenfahrzeugs 20 im Schnitt, wobei der Fahrzeugkörper 21 an seinem unteren Ende eine Aufhängung 23 für eine Achse 24 aufweist. An einem Ende der Achse 24 befindet sich ein Rad 25, welche mit seiner Lauffläche 26 im unteren Kontaktbereich 27 auf einer Schiene 28 läuft. Die durch die Bewegung resultierende Rollreibung des Rades 25 auf der Schiene 28 regt im Rad 25 eine entsprechend den vorherrschenden Gegebenheiten auftretende Schallschwingung an, welche üblicherweise als Bewegungsgeräusch des Schienenfahrzeugs wahrgenommen wird. Ein Prüfkopf 30, welcher im vorliegenden Fall oberhalb der Lauffläche 26 am Fahrzeugkörper 21 befestigt ist, umfasst einen Laser 31 sowie einen Detektor 32. Im Inneren des Prüfkopfs 30 ist vorzugsweise ein Strahlteiler vorgesehen, welcher Teile des vom Laser emittierten Lichts direkt zum Detektor umleitet und somit für die spätere Interferenz mit einem Messsignal zur Verfügung steht (hier nicht gezeigt). Der Laser 31 emittiert Licht in Form eines Einfallsignals 33, welches auf einen Messpunkt 34 auf der Lauffläche 26 des Radreifens 25 gerichtet ist. Von der Lauffläche 26, insbesondere von dem Messpunkt 34 wird ein reflektiertes Signal 35 zurück zum Prüfkopf 30 entsandt, welches vom Detektor 32 aufgenommen wird. Am Detektor 32 wird die Reflexion 35 mit dem, vorab durch den Strahlenteiler bereitgestellten Bestandteil des Laserlichts in Interferenz gebracht, wobei eine Signalintensitäts-Rückregelung dahingehend vorgesehen ist, dass das bereitgestellte Signal vom Strahlenteiler und die Intensität des reflektierten Signals 35 eine ähnliche Amplituden-Größenordnung ausweist, um die bestmögliche Interferenz-Amplitude zur Verfügung zu stellen.

Alternativ oder ergänzend zum Prüfkopf 30 könnte ein Prüfkopf 40 in einem hinter dem Radreifen angeordneten Bereich vorgesehen sein, welcher im Wesentlichen identisch zum Prinzip des Prüfkopfs 30 funktioniert. Exemplarisch ist am Prüfkopf 40 gezeigt, dass der Messpunkt auch entlang eines Rasters 41 verschiebbar ausgebildet sein kann, wobei hierzu entsprechende optische Ablenkungsmittel oder eine komplette Bewegung des Prüfkopfs vorgesehen sein kann. Problematisch an einer Anordnung des Prüfkopf 40 hinter dem Rad 25 könnte eine zunehmende Verschmutzung der Analysefläche sein, welche keine zuverlässige Reflexion des Laserstrahls gewährleistet, und somit kein reproduzierbar auswertbares Messsignal bereitstellt.

Der Prüfkopf 30 sowie der Prüfkopf 40 könnten mit entsprechenden Verstellmitteln ausgerüstet sein, welche eine Veränderung der Position des erfassten Messpunkts 34 ermöglichen, und somit eine Variation des Erfassungspunktes des charakteristischen Grenzflächenschall-Spektrums ermöglichen. Die in Figur 2 nicht dargestellte erfindungsgemäße Anordnung weiterer Erfassungsvorrichtungen entsprechender Parameter, wie beispielsweise Dopplereffektmessungen oder Geschwindigkeitssensoren, wie auch die optische Bilderfassungsvorrichtung in Form einer Kamera bzw. die Positionserfassung in Form eines GPS-Sensors können bei dem in Figur 2 dargestellten Einsatz der erfindungsgemäßen Vorrichtung bzw. des erfindungsgemäßen Verfahrens ausgebildet werden.

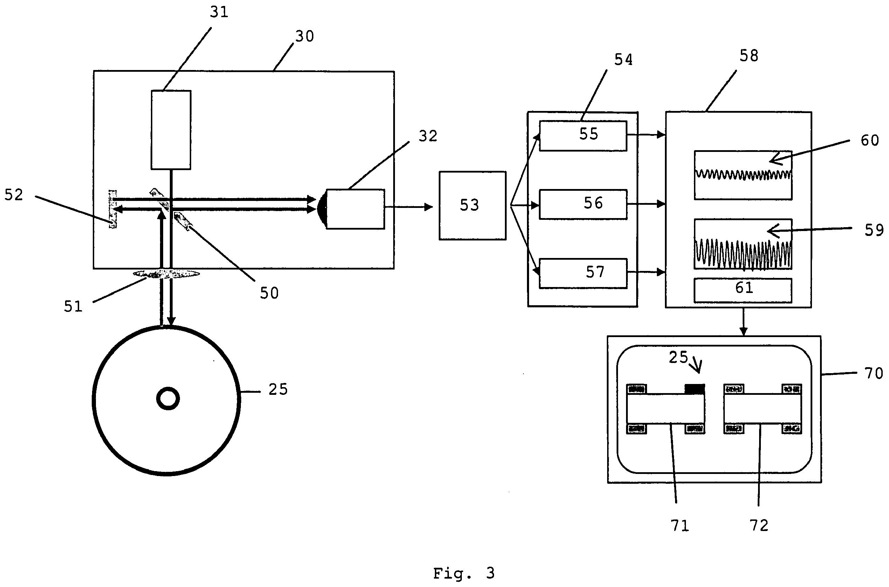

Figur 3 zeigt eine erfindungsgemäße Anordnung einzelner Bestandteile zur Bereitstellung einer Vorrichtung zur Detektion struktureller Veränderungen an oder in einem Festkörper, vorliegend am Beispiel eines Laufrades eines Schienenfahrzeugs. Der Prüfkopf 30 umfasst dabei den Laser 31, welcher einen Strahlenteiler 50 Laserlicht einerseits über eine Linse 51 auf die Lauffläche 26 eines Rads 25 aussendet, andererseits über den Strahlenteiler 50 einen Bestandteil des Lichts über einen Spiegel 52 ohne Reflexion an einem Rad 25 auf einen Detektor 32 geführt wird. Die Oberflächenschwingung des Rads 25 führt zu einer Veränderung der optisch relevanten Weglänge der einzelnen Laserstrahlverläufe, wodurch auf dem Detektor 32 zwischen den einzelnen Strahlen ein Interferenzmüster entsteht. Der aus der Interferenz resultierende Verlauf der Signalamplitude über die Zeit wird über einen Analog-/Digitalwandler 53 in Signale umgewandelt, welche in einem Speicher 54 abgelegt werden. Der Speicher, hier exemplarisch als Speicherung einer Referenz 1 55 einer Referenz 2 56 sowie eines aktuellen Messsignals 57 dargestellt, kann seine Daten an eine Signalverarbeitungsvorrichtung 58, vorzugsweise einen Computer übergeben, welcher das erfindungsgemäße Verfahren im Bezug auf die Analyse ausführt. Hierbei wird ermittelt, ob an dem Festkörper, vorliegend an dem Rad, ein Schaden vorliegt, welcher in einer Signalveränderung 59 im Vergleich zu einem schadensfreien Signal 60 detektierbar ist. Zusätzlich wird die Signalverarbeitungseinheit 48 über entsprechende Mittel 61 mit einer zeitlichen Referenz sowie einer Positionsangabe versorgt, so dass entstandene strukturelle Veränderungen zeitlich und räumlich zugeordnet werden können. Durch das Vorhandensein mehrerer Prüfköpfe 30 kann an einem Monitor 70 bezugnehmend auf das jeweilige Rad eines entsprechenden Wagens 71 bzw. 72 dargestellt werden, an welchem Rad 25 die strukturelle Veränderung vorliegt. Auf diese Weise kann beispielsweise dem Führer eines Schienenfahrzeugs oder dem Servicepersonal signalisiert werden, an welcher Stelle Handlungsbedarf besteht.

### Bezugszeichenliste:

- 20: Schienenfahrzeug
- 21: Fahrzeugkörper
- 22 23: Aufhängung
- 24: Achse
- 25: Rad
- 26: Lauffläche
- 27: Kontaktbereich
- 28: Schiene
- 29 30: Prüfkopf
- 31: Laser
- 32: Detektor
- 33: Einfallsignal
- 34: Messpunkt
- 35: Reflexion
- 40: Prüfkopf
- 41: Raster
- 48: Signalverarbeitungseinheit
- 50: Strahlenteiler
- 51: Linse
- 52: Spiegel
- 53: Analog/Digital Wandler
- 54: Referenz 1
- 55: Referenz 1
- 56: Referenz 2
- 57: Aktuell
- 58: Signalverarbeitung
- 59: Schaden
- 60: Kein Schaden
- 61: Datum, Ort
- 70: Monitor
- 71: Wagen 2
- 72: Wagen 3

## Patentansprüche

1. Verfahren zur Detektion struktureller Veränderungen in oder an einem Festkörper (25) mittels Körperschallanalyse, umfassend mindestens eine Anwendung folgender Verfahrensschritte:
- Erfassung eines ersten charakteristischen Grenzflächenschall-Spektrums (54) des Festkörpers zu einem ersten Zeitpunkt
- Verarbeitung und Speicherung des ersten Spektrums in einem Datenspeicher (58)
- Erfassung eines zweiten charakteristischen Grenzflächenschall-Spektrums (55) des Festkörpers zu einem zweiten Zeitpunkt
- Verarbeitung und Speicherung des zweiten Spektrums in einem Datenspeicher (58)
- Auswertung der gespeicherten Daten durch Vergleich zwischen dem ersten Grenzflächenschall-Spektrum und dem zweiten Grenzflächenschall-Spektrums zur Erkennung von Veränderungen
**dadurch gekennzeichnet, dass**
- das Grenzflächenschall-Spektrum ein Schwingungsspektrum von Oberflächenschwingungen des Festkörpers ist
- und die Erfassung der charakteristischen Grenzflächenschall-Spektren mittels einer Laser (31) Interferenz Messung über eine Amplitudenmodulation erfolgt
- und die Erfassung der charakteristischen Grenzflächenschall-Spektren und die Auswertung kontinuierlich im Wechsel erfolgt.

2. Verfahren nach Anspruch 1, **dadurch gekennzeichnet, dass** die Erfassung der charakteristischen Grenzflächenschall-Spektren mehrere Schallspektren (55, 56, 57) früherer Zeitpunkte umfasst.

3. Verfahren nach Anspruch 1 oder 2, **dadurch gekennzeichnet, dass** die Erfassung der charakteristischen Grenzflächenschall-Spektren vorzugsweise in mindestens einem Messpunkt auf der Festkörperoberfläche erfolgt wobei die Aufnahme der charakteristischen Schallspektren vorzugsweise in einem Punkt auf der Oberfläche des Festkörpers erfolgt, und dabei eine rasterartige Abtastung der Oberfläche ganz oder teilweise erfolgen kann.

4. Verfahren nach einem oder mehreren der vorangegangenen Ansprüche, **dadurch gekennzeichnet, dass** die charakteristischen Grenzflächenschall-Spektren als Intensitäts-Zeit-Verlaufsmessung erfasst werden.

5. Verfahren nach einem oder mehreren der vorangegangenen Ansprüche, **dadurch gekennzeichnet, dass** die Auswertung in einem weiteren Verfahrensschritt einer Integraltransformation unterzogen wird, vorzugsweise einer Fouriertransformation oder eine Wavelet Transformation zur Erzielung einer Spektralen-Darstellung.

6. Verfahren nach einem oder mehreren der vorangegangenen Ansprüche, **dadurch gekennzeichnet, dass** die Auswertung durch Wandlung der gewonnenen Messgrößen in einem Analog/DigitalWandler (53) und Übertragung an einen Rechner erfolgt wobei die Auswertung insbesondere durch Differenzbildung zur Erkennung von spektralen Veränderungen zwischen mindestens dem zuletzt aufgenommenen charakteristischen Schallspektrum und mindestens einem oder mehreren, vorzugsweise gemittelten vorangegangen aufgenommenen und gespeicherten Schallspektren erfolgt.

7. Verfahren nach einem oder mehreren der vorangegangenen Ansprüche, **dadurch gekennzeichnet, dass** weitere charakteristische Daten, vorzugsweise Geschwindigkeits- und Drehzahldaten sowie makroskopische Bewegungen über Dopplereffektmessungen erfasst werden, und der Auswerteeinheit übergebbar sind.

8. Vorrichtung zur Detektion struktureller Veränderungen in oder an einem Festkörper, umfassend
- einen Prüfkopf (30) zur Erfassung von Oberflächenschwingungen eines Festkörpers,
- einen Auswerterechner mit einer Speichereinheit, zur Verarbeitung der von mindestens einem Prüfkopf übermittelten Daten,
**dadurch gekennzeichnet, dass** der Auswerterechner mit Speichereinheit eingerichtet ist, die Verfahrensschritte nach einem der Ansprüche 1-7 durchzuführen.

9. Vorrichtung nach Anspruch 8, **dadurch gekennzeichnet, dass** der Prüfkopf (39) eine monochromatische Lichtquelle, vorzugsweise einen Laser (31), einen Strahlteiler (50) zur Erzeugung interferierbarer Lichtstrahlen aus der Lichtquelle, einen Intensitätsdetektor (32), vorzugsweise eine Photozelle oder eine Photozellenanordnung sowie eine Analog/Digital-Wandlungseinheit (53) umfasst.

10. Vorrichtung nach einem oder mehreren der Ansprüche 8 bis 9, **dadurch gekennzeichnet, dass** der Festkörper ein Metallkörper, vorzugsweise ein Rad (25) eines Schienenfahrzeugs ist wobei die Erfassung der Oberflächenschwingung vorzugsweise auf der Lauffläche (26) des Rads (25) erfolgt.

11. Vorrichtung nach einem oder mehreren der Ansprüche 8 bis 10, **dadurch gekennzeichnet, dass** der Prüfkopf (30) Mittel zur rasterartigen Bewegung eines Messpunkts zur Erfassung der Oberflächenschwingungen aufweist.

12. Verwendung von Vorrichtungen nach einem der Ansprüche 8 bis 11 zur Detektion struktureller Veränderungen in oder an einem oder mehreren Festkörpern, vorzugsweise an Laufrädern von Schienenfahrzeugen, umfassend mindestens einen Prüfkopf (30) pro Festkörper und mindestens einen Auswerterechner, **dadurch gekennzeichnet, dass** die Erfassung an der Lauffläche der Festkörper, vorzugsweise der Laufräder von Schienenfahrzeugen erfolgt.

13. Verwendung nach Anspruch 12, **dadurch gekennzeichnet, dass** die Anordnung mit einem Fahrzeug, vorzugsweise einem Schienenfahrzeug mitbewegt wird, vorzugsweise darin integriert ausgebildet ist.

14. Verwendung nach Anspruch 12 oder 13, **dadurch gekennzeichnet, dass** mindestens eine Kamera und mindestens ein Positionserfassungsmittel, vorzugsweise ein GPS Sensor vorgesehen ist, wobei die detektierte strukturelle Veränderung insbesondere eine kurzeitige detektierte Veränderung, ein Schaltsignal für eine Aktivierung der Kamera und eine Erfassung der Position ist.

## Claims

1. A method for detecting structural changes in or on a solid body (25) by means of structure-borne sound analysis, comprising at least one application of the following process steps:
- Capture of a first characteristic interface-borne sound spectrum (54) of the solid body at a first point in time
- Processing and storage of the first spectrum in a data memory (58)
- Capture of a second characteristic interface-borne sound spectrum (55) of the solid body at a second point in time
- Processing and storage of the second spectrum in a data memory (58)
- Evaluation of the stored data by comparison between the first interface-borne sound spectrum and the second interface-borne sound spectrum for detection of changes
**characterized in that**
- the interface-borne sound spectrum is a vibration spectrum of surface vibrations of the solid body
- and the capture of the characteristic interface-borne sound spectra occurs by means of a laser (31) interference measurement via an amplitude modulation
- and the capture of the characteristic interface-borne sound spectra and the evaluation occurs continuously in alternation.

2. A method according to Claim 1, **characterized in that** the capture of the characteristic interface-borne sound spectra comprises several sound spectra (55, 56, 57) of earlier points in time.

3. A method according to Claim 1 or 2, **characterized in that** the capture of the characteristic interface-borne sound spectra preferably occurs in at least one measurement point on the solid body surface, wherein the reception of the characteristic sound spectra preferably occurs in one point on the surface of the solid body, and a grid-like scan of the surface can occur wholly or partially.

4. A method according to one or several of the preceding claims, **characterized in that** the characteristic interface-borne sound spectra are captured by an intensity-time sequence measurement.

5. A method according to one or several of the preceding claims **characterized in that** in a further process step the evaluation is subjected to an integral transformation, preferably to a Fourier transformation or a wavelet transformation to attain a spectral representation.

6. A method according to one or several of the preceding claims, **characterized in that** the evaluation occurs by transformation of the measured quantities obtained in an analog/digital transformer (53) and transfer to a computer, wherein the evaluation occurs in particular through subtraction for the detection of spectral changes between at least the characteristic sound spectrum last received and at least one or several preferably averaged previously received and stored sound spectra.

7. A method according to one or several of the preceding claims, **characterized in that** further characteristic data, preferably velocity- and rotation speed data, as well as macroscopic movements are captured via Doppler effect measurements, and can be transferred to the analysis unit.

8. A device for detecting structural changes in or on a solid body, comprising
- a test head (30) for capturing surface vibrations of a solid body,
- an evaluation computer with a memory unit, for processing the data transmitted by at least one test head,
**characterized in that** the evaluation computer is set up with a memory unit, to implement the process steps according to one of Claims 1-7.

9. A device according to Claim 8, **characterized in that** the test head (39) comprises a monochromatic light source, preferably a laser (31) a beam splitter (50) for generating interferable light beams from the light source, an intensity detector (32), preferably a photocell or a photocell arrangement as well as an analog/digital transformation unit (53).

10. A device according to one or several of Claims 8 to 9, **characterized in that** the solid body is a metal body, preferably a wheel (25) of a rail vehicle, wherein the capture of the surface vibration occurs preferably on the running surface (26) of the wheel (25).

11. A device according to one or several of Claims 8 to 10, **characterized in that** the test head (30) has means for the grid-like movement of a measurement point for capturing surface vibrations.

12. A use of devices according to one of Claims 8 to 11 for detecting structural changes in or on one or several solid bodies, preferably on running wheels of rail vehicles, comprising at least one test head (30) per solid body and at least one evaluation computer, **characterized in that** the capture occurs on the running surface of the solid body, preferably the running wheels of rail vehicles.

13. A use according Claim 12, **characterized in that** the arrangement is moved together with a vehicle, preferably a rail vehicle, preferably integrally formed therein.

14. A use according to Claim 12 or 13, **characterized in that** at least one camera and at least one position detection means, preferably a GPS sensor is provided, wherein the detected structural change, in particular a short-term detected change is a switching signal for an activation of the camera and a detection of the position.

## Revendications

1. Procédé pour la détection de modifications structurelles dans ou sur un corps solide (25) au moyen d'une analyse des bruits de structure, comprenant au moins une application des étapes de procédé suivantes :
- mesure d'un premier spectre de bruit de surface limite (54) caractéristique du corps solide à un premier moment
- traitement et enregistrement du premier spectre dans une mémoire de données (58)
- mesure d'un deuxième spectre de bruit de surface limite (55) caractéristique du corps solide à un deuxième moment
- traitement et enregistrement du deuxième spectre dans une mémoire de données (58)
- analyse des données enregistrées par comparaison entre le premier spectre de bruit de surface limite et le deuxième spectre de bruit de surface limite pour la détection de modifications
**caractérisé en ce que**
- le spectre de bruit de surface limite est un spectre de vibrations superficielles du corps solide
- et la mesure des spectres de bruit de surface limite caractéristique a lieu au moyen d'une mesure d'interférence laser (31) grâce à une modulation d'amplitude
- et la mesure des spectres de bruit de surface limite et l'analyse ont lieu de manière continue en alternance.

2. Procédé selon la revendication 1, **caractérisé en ce que** la mesure du spectre de bruit de surface limite caractéristique comprend plusieurs spectres de bruit (55, 56, 57) à des moments antérieurs.

3. Procédé selon la revendication 1 ou 2, **caractérisé en ce que** la mesure des spectres de bruit de surface limite caractéristiques a lieu de préférence au niveau d'au moins un point de mesure à la surface du corps solide, l'enregistrement des spectres de bruit caractéristiques ayant lieu de préférence au niveau d'un point sur la surface du corps solide et un balayage en trame de la surface pouvant avoir lieu entièrement ou partiellement.

4. Procédé selon l'une ou plusieurs des revendications précédentes, **caractérisé en ce que** les spectres de bruit de surface limite caractéristiques sont mesurés en tant que mesure de courbe intensité-temps.

5. Procédé selon l'une ou plusieurs des revendications précédentes, **caractérisé en ce que** l'analyse est soumise, dans une autre étape de procédé, à une transformation intégrale, de préférence à une transformation de Fourier ou une transformation d'ondelettes afin d'obtenir une représentation spectrale.

6. Procédé selon l'une ou plusieurs des revendications précédentes, **caractérisé en ce que** l'analyse a lieu par conversion des grandeurs de mesure obtenues dans un convertisseur analogique/numérique (53) et par transmission à un ordinateur, l'analyse ayant lieu par la formation d'une différence pour la détection de modifications spectrales entre au moins le spectre de bruit caractéristique enregistré en dernier et au moins un ou plusieurs spectres de bruit précédents, de préférence moyennés, enregistrés et mémorisés.

7. Procédé selon l'une ou plusieurs des revendications précédentes, **caractérisé en ce que** d'autres données caractéristiques, de préférence les données de vitesse et de vitesse de rotation, ainsi que les mouvements macroscopiques, sont mesurées par mesure à effet Doppler et peuvent être transmises à l'unité d'analyse.

8. Dispositif de détection de modifications structurelles dans ou sur un corps solide, comprenant
- une tête de contrôle (30) pour la mesure de vibrations superficielles d'un corps solide,
- une unité d'analyse avec une unité de mémoire, pour le traitement des données transmises par au moins une tête de contrôle,
**caractérisé en ce que** l'ordinateur d'analyse est muni d'une unité de mémoire qui exécute les étapes de procédé selon l'une des revendications 1 à 7.

9. Dispositif selon la revendication 8, **caractérisé en ce que** la tête de contrôle (39) comprend une source de lumière monochromatique, de préférence un laser (31), un diviseur de faisceau (50) pour la production de faisceaux lumineux, pouvant interférer, provenant de la source de lumière, un détecteur d'intensité (32), de préférence une cellule photoélectrique ou une disposition de cellules photoélectriques ainsi qu'une unité de conversion analogique/numérique (53).

10. Dispositif selon l'une ou plusieurs des revendications 8 à 9, **caractérisé en ce que** le corps solide est un corps métallique, de préférence une roue (25) d'un véhicule ferroviaire, la mesure de la vibration superficielle ayant lieu de préférence sur la surface de roulement (26) de la roue (25).

11. Dispositif selon l'une ou plusieurs des revendications 8 à 10, **caractérisé en ce que** la tête de contrôle (30) comprend des moyens pour le mouvement en trame d'un point de mesure pour la mesure des vibrations superficielles.

12. Utilisation de dispositifs selon l'une des revendications 8 à 11 pour la détection de modifications structurelles dans ou sur un ou plusieurs corps solides, de préférence sur des roues de véhicules ferroviaires, comprenant au moins une tête de contrôle (30) par corps solide et au moins un ordinateur d'analyse, **caractérisé en ce que** la mesure a lieu sur la surface de roulement des corps solides, de préférence des roues de véhicules ferroviaires.

13. Utilisation selon la revendication 12, **caractérisé en ce que** la disposition est déplacée avec un véhicule, de préférence un véhicule ferroviaire, de préférence est intégré dans celui-ci.

14. Utilisation selon la revendication 12 ou 13, **caractérisé en ce qu'**au moins une caméra et au moins un moyen de mesure de position, de préférence un capteur GPS est prévu, la modification structurelle détectée, plus particulièrement une modification détectée à court terme, étant un signal de commutation pour une activation de la caméra et une mesure de la position.
